## Europäisches Patentamt

## European Patent Office

## Office européen des brevets

(19)

(11) Veröffentlichungsnummer: **0 048 871**
**B1**

(12) **EUROPÄISCHE PATENTSCHRIFT**

(45) Veröffentlichungstag der Patentschrift:
**15.02.84**

(51) Int. Cl.³: **C 04 B 35/00,** H 01 C 7/10

(21) Anmeldenummer: **81107189.3**

(22) Anmeldetag: **11.09.81**

(54) **Verfahren zur Herstellung von Keramikmaterial für Zinkoxid-Varistoren.**

(30) Priorität: **29.09.80 DE 3036617**

(43) Veröffentlichungstag der Anmeldung:
**07.04.82 Patentblatt 82/14**

(45) Bekanntmachung des Hinweises auf die Patenterteilung:
**15.02.84 Patentblatt 84/7**

(84) Benannte Vertragsstaaten:
**FR GB**

(56) Entgegenhaltungen:
**DE - A - 2 363 438**
**DE - A - 2 752 150**

**JAPANESE JOURNAL OF APPLIED PHYSICS, Band 19, Nr. 3, März 1980, Tokyo, M. INADA "Formation Mechanism of Nonohmic Zinc Oxide Ceramics" Seiten 409 to 419**

(73) Patentinhaber: **SIEMENS AKTIENGESELLSCHAFT, Berlin und München Wittelsbacherplatz 2, D-8000 München 2 (DE)**

(72) Erfinder: **Eckel, Max-Ferdinand, Dr., Dipl.-Chem., Hochwaldstrasse 28, D-8000 München 70 (DE)**

ACTORUM AG

Verfahren zur Herstellung von Keramikmaterial für Zinkoxid-Varistoren

Die vorliegende Erfindung bezieht sich auf ein Verfahren zur Herstellung von Keramikmaterial für Zinkoxid-Varistoren, wie im Oberbegriff des Patentanspruchs angegeben.

Varistoren sind Widerstände mit nichtlinearer Strom-Spannungs-Kennlinie. Sobald die am Varistor anliegende elektrische Spannung einen bestimmten kritischen Wert übersteigt, nimmt der Wert des elektrischen Widerstands des Varistors stark ab. Das Strom-Spannungs-Verhalten eines Varistors wird gewöhnlich durch die Gleichung $I = (U/C)^{\alpha}$ wiedergegeben, wobei U die an dem Varistor anliegende Spannung und I der durch den Varistor fliessende Strom ist. Die Grösse C ist eine Proportionalitätskonstante und $\alpha$ ist der Nichtlinearitätskoeffizient.

Varistoren finden zunehmend Anwendung zur Überspannungsbegrenzung als Schutz gegen Spannungsstösse und auch zur Spannungsstabilisierung. Ältere Entwicklungen führten zu Varistoren aus Siliziumkarbid mit $\alpha$-Werten von etwa 3 bis 7. Neuere Entwicklungen führten zu Metalloxid-Varistoren, wie z.B. aus Zinkoxid. Bei Zinkoxid-Varistoren setzt z.B. der Varistoreffekt bereits bei erheblich niedrigeren Spannungen ein, so dass sie auch in der Autoelektronik Verwendung finden können. Zinkoxid-Varistoren haben $\alpha$-Werte zwischen 15 und 60.

Zur Stabilisierung des Varistoreffekts, d.h. insbesondere des Wertes $\alpha$ bei niedrigen Stromdichten wird dem Zinkoxid-Ausgangsmaterial ausser einer mehr oder weniger grossen Anzahl von sonstigen Zusätzen Antimon zugegeben, das einen stabilisierenden Effekt für die elektrischen Eigenschaften des für Varistoren verwendeten Zinkoxid-Materials hat.

In «J. Appl. Physics», Bd. 46 (1975), Seiten 1653 ff. sind Untersuchungen beschrieben, nach denen das Antimon im Material eines Zinkoxid-Varistors u.a. in einer Phase entsprechend dem Spinell $Zn_7Sb_2O_{12}$ vorliegt, worin das Antimon fünfwertig ist.

Aus der DE-A 27 52 150 ist des weiteren der Vorschlag bekannt, das Antimon der Zinkoxid-Ausgangsmasse in der Form dieses Spinells $Zn_7Sb_2O_{12}$, und vorzugsweise in einer bestimmten Korngrössenfraktion, zuzugeben.

Es ist festgestellt worden, dass es für das Erreichen grossen Kornwachstums günstig ist, das Antimon in fünfwertiger statt in dreiwertiger Form des $Sb_2O_3$ zuzugeben. Grobkörnigeres Zinkoxid bewirkt in Varistoren, dass diese eine relativ niedrige Einsatzspannung für den Varistoreffekt haben.

Es hat sich gezeigt, dass es relativ schwierig ist, die Spinell-Phase $Zn_7Sb_2O_{12}$ so rein bezüglich des fünfwertigen Antimons herzustellen, dass nicht doch für die Eigenschaften des Zinkoxids als Varistormaterial nachteilige Restbestandteile an dreiwertigem $Sb_2O_3$ enthalten sind.

Es ist somit eine Aufgabe der vorliegenden Erfindung, Massnahmen anzugeben, mit denen der vorteilhafte Einfluss fünfwertigen Antimons im Material eines Zinkoxid-Varistors in vollem Umfang erreicht werden kann, und zwar insbesondere mit möglichst geringem Aufwand.

Diese Aufgabe wird mit einem Verfahren nach dem Oberbegriff des Patentanspruchs erfindungsgemäss unter Anwendung der Massnahmen des Kennzeichens des Patentanspruchs gelöst.

Die vorliegende Erfindung baut auf der Idee auf, das notwendige Antimon in einer Verbindung, in der es bereits in fünfwertigem Zustand vorliegt, den Ausgangsstoffen Zinkoxid und Zusätzen zuzugeben. Es wurde daher nach solchen Antimon-Verbindungen gesucht, in denen das Antimon in nur fünfwertigem Zustand vorliegt und die sich leicht herstellen lassen. Parallel dazu wurde ein davon getrennter anderer Gedanke verfolgt, das in Zinkoxid-Varistormaterial in der Regel verwendete Wismutoxid durch eine andere Wismut-Verbindung zu ersetzen, die weit weniger flüchtig ist, um im Fertigungsprozess Unterschuss an Wismut zu vermeiden.

Als ideale und gemeinsame Lösung für die beiden Probleme ergab sich die Verwendung des $Bi_6Zn_4Sb_2O_{18}$, das eine Pyrochlor-Struktur hat. Die angegebene Formel ist die wenigstens angenäherte Zusammensetzung dieser Wismut-Zink-Antimon$^{V}$-Verbindung, in der auch dagegen geringe Verschiebungen der Anteile zueinander vorliegen können. Immer liegt jedoch das Antimon in fünfwertiger Form vor, und immer ist auch der Wismut-Anteil nur in vergleichsweise sehr geringem Masse flüchtig.

Diese $Bi_6Zn_4Sb_2O_{18}$ Pyrochlor-Verbindung lässt sich auch leichter herstellen als der oben angegebene Zink-Antimon-Spinell. Das Wismutoxid, das Zinkoxid und das Antimonoxid werden in entsprechender stöchiometrischer Menge zunächst miteinander gut gemischt und dann bei etwa 800°C zwei Stunden lang umgesetzt. Das orangegelbe Umsatzprodukt wird dann fein gemahlen und in wie vorgesehener Menge den übrigen Ausgangsstoffen des Varistormaterials zugegeben, wobei die bereits durch die erfindungsgemässe Zugabe von Wismut-Zink-Antimon gelieferten Zugabeanteile in der Gesamtzusammensetzung berücksichtig sind. Es braucht Wismutoxid als $Bi_2O_3$ der Ausgangsmasse dann in nur noch wesentlich geringerer Menge zugegeben werden, so dass auf Verdampfung von $Bi_2O_3$ beruhender Wismutverlust in entsprechend weit geringerem Ausmass eintritt. Die Verwendung der erfindungsgemäss vorgesehenen Zugabe hat ausserdem noch den Vorteil, dass die Wismut-Komponente und die Antimon-Komponente zusammen mit einem Zink-Anteil bereits vorgemischt in die Gesamtmasse hereingegeben werden. Dies führt zu einer homogeneren Mischung des Hauptbestandteils Zinkoxid mit diesen Nebenbestandteilen und damit auch zu einem homogeneren Endmaterial mit entsprechend geringerer Streuung der elektrischen Werte der daraus hergestellten Zinkoxid-Varistoren.

Für das Zinkoxid-Varistormaterial mit fünfwertigem Antimon werden also die Hauptkomponente Zinkoxid, die erfindungsgemässe Komponente $Bi_6Zn_4Sb_2O_{18}$ und die weiteren jeweils vorgesehenen Zusatzkomponenten wie Kobaltoxid, Manganoxid und Titanoxid in wie vorgesehenem Mengenverhältnis homogen miteinander vermengt und gemischt, und es werden aus dieser Mischung dann nach den bekannten Verfahrensschritten die für die Zinkoxid-Varistoren vorgesehenen Formkörper gepresst und bei Temperaturen von beispielsweise 1150° eineinhalb Stunden lang gesintert. Die weitere Verarbeitung der gesinterten Formkörper, z.B. die Anbringung von Elektroden, erfolgt ebenfalls nach bekannten Methoden.

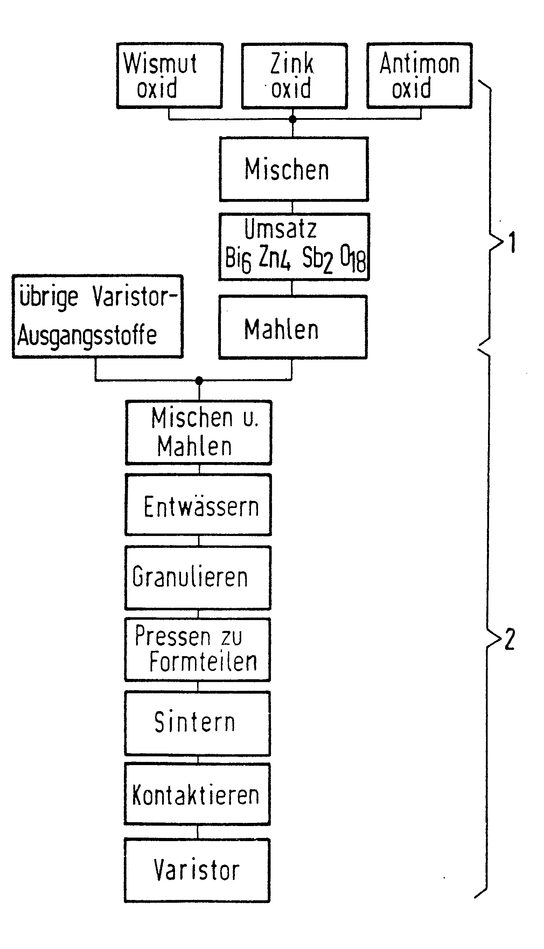

Die voranstehend angegebenen Schritte des Herstellungsverfahrens sind im 'flow sheet' der beigefügten Figur nochmals angegeben. Der mit 1 bezeichnete Anteil des flow sheet bezieht sich auf ein spezielles Verfahren zur Herstellung des $Bi_6Zn_4Sb_2O_{18}$ und der andere Anteil 2 bezieht sich auf die eigentliche Herstellung des Varistors.

## Patentanspruch

1. Verfahren zur Herstellung von Keramikmaterial für Zinkoxid-Varistoren, wobei in diesem Material Wismut und Antimon enthalten ist, das den Ausgangsstoffen in fünfwertiger Verbindung zugegeben wird, gekennzeichnet dadurch, dass das Antimon als eine Verbindung zugegeben wird, die wenigstens weitgehend angenähert der Formel $Bi_6Zn_4Sb_2O_{18}$ entspricht.

## Claim

A process for the production of ceramic material for zinc oxide varistors, where the material contains bismuth and antimony which is added to the initial substances in a pentavalent compound, characterised in that the antimony is added as a compound which at least to a large extent corresponds approximately to the formula $Bi_6Zn_4Sb_2O_{18}$.

## Revendication

Procédé de préparation de matériau céramique pour varistor en oxyde de zinc, du bismuth et de l'antimoine étant contenus dans ce matériau, l'antimoine étant ajouté à l'état de composé pentavalent aux matières de départ, caractérisé en ce qu'il consiste à ajouter l'antimoine sous la forme d'un composé qui correspond, au moins dans une grande mesure, à peu près à la formule $Bi_6Zn_4Sb_2O_{18}$.

```
┌──────────┐  ┌──────────┐  ┌──────────┐
│ Wismut   │  │ Zink     │  │ Antimon  │
│ oxid     │  │ oxid     │  │ oxid     │
└──────────┘  └──────────┘  └──────────┘
```

Mischen

Umsatz
$Bi_6\ Zn_4\ Sb_2\ O_{18}$

übrige Varistor-
Ausgangsstoffe

Mahlen

Mischen u.
Mahlen

Entwässern

Granulieren

Pressen zu
Formteilen

Sintern

Kontaktieren

Varistor

1

2